# EUROPEAN PATENT SPECIFICATION

(11) **EP 3 230 122 B1**
(45) Date of publication and mention of the grant of the patent: **10.03.2021**
(21) Application number: 15823732.1
(22) Date of filing: 11.12.2015
(51) Int. Cl.: B60N 3/04, B29C 65/04, B29L 31/00, B29L 31/30

(54) **MAT WITH A HEEL PAD**
MATTE MIT EINEM FERSENPOLSTER
TAPIS DOTÉ D'UNE TALONNETTE DE PROPRETÉ

(30) Priority: 12.12.2014 GB 201422114
(43) Date of publication of application: 18.10.2017
(73) Proprietor: Kimsey, Paul, Woodhall Spa, Lincolnshire LN10 6QH (GB)
(72) Inventor: Kimsey, Paul, Woodhall Spa, Lincolnshire LN10 6QH (GB)
(74) Representative: Craske, Stephen Allan
(86) International application number: PCT/GB2015/053901
(87) International publication number: WO 2016/092332

(56) References cited:
- WO-A1-00/07842

## Description

### TECHNICAL FIELD OF THE INVENTION

This invention relates to mats of the kind which include a heel pad.

### BACKGROUND

High frequency welding (HFW) is a technique which has been known for many years and is used in many manufacturing areas, but mainly in textiles. In the manufacture of vehicle mats it is not uncommon to secure a heel pad to the mat using HFW in order to better withstand the wear produced by the driver's heels. Such a process is described in WO 00/07 842 A1 and GB 2 358 608 A**.** The reason for using HFW to attach the heel pad is that the welding machine embosses the heel-pad deep into the material of the base mat and this avoids the need for a sewn-in heel-pad, saves the cost of a machinist, and creates a neat and aesthetically pleasing appearance. The size and shape of mats for different makes and models of vehicle are different, but the heel pads are typically, and always have been, of a standard rectangular shape, although more intricate shapes are not unknown - see JP 2009 254 488 A**.**

The HFW process requires the production of a brass die which forms a primary weld around the periphery of the heel pad. The downside to these HFW tools is that they are very expensive, so investment is usually high. This is why a standard rectangular HFW heel-pad is typical, as one standard size and shape can easily accommodate almost any configuration of drivers mat.

Although there are specific areas of the mat where a driver places his or her heels to operate the accelerator, brake and clutch pedals, which can vary from vehicle to vehicle, different driving positions and driving habits mean that wear may take place anywhere in a broad area across the width of the mat. There is also a risk that for a small number of drivers their heels could catch on the edge of the heel pad, as their foot is moved from the accelerator to the brake pedal for example. However, if a near-full-width heel pad was to be produced and welded in the typical way, a different HFW tool would be required for each driver's mat for every make and model of vehicle, which would be very expensive. As an example, Ford have around ten to twelve models in their range, requiring the same number of welding tools. Multiply that by around twenty different manufacturers and the investment involved would become enormous.

It is known from **JPS 59 120 418** A to use a combined HFW die and cutter to remove the edges of an applied vehicle trim during the welding process. However, this gives no advantage over conventional rectangular heel pads in terms of the number of tools required, and would in fact increase the cost of each tool and create extra waste.

The present invention seeks to provide a new and inventive form of mat which incorporates a HFW heel pad that is both aesthetically attractive and provides more comprehensive wear protection for every mat set with minimum investment in tooling.

### SUMMARY OF THE INVENTION

The present invention provides a method of making a mat according to claim 1.

The invention also provides a mat according to claim 5.

The invention also provides a mat and method of making same which includes a base mat and a heel pad secured to an upper surface of the base mat by high frequency welding, in which the heel pad is secured to the base mat by welds extending along opposite edges of the heel pad and by additional high frequency welds between those edges.

The invention also provides a mat and method of making same which includes a base mat and a heel pad secured to an upper surface of the base mat by high frequency welding, in which the heel pad extends across the full width of the base mat between opposite side edges.

The invention also provides a mat and method of making same which includes a base mat and a heel pad secured to an upper surface of the base mat by high frequency welding, in which opposite edges of the heel pad converge towards one side edge of the base mat.

The invention also provides a mat and method of making same which includes a base mat and a heel pad secured to an upper surface of the base mat by high frequency welding, in which an edge binding is applied around the periphery of the base mat, covering cut edges of the heel pad.

### BRIEF DESCRIPTION OF THE DRAWINGS

The following description and the accompanying drawings referred to therein are included by way of non-limiting example in order to illustrate how the invention may be put into practice. In the drawings:
Figure 1 is a general view of a driver's mat at an initial stage in the manufacturing process;
Figure 2 is is a general view of the mat at an intermediate stage in the manufacturing process; and
Figure 3 is a general view of the completed mat.

### DETAILED DESCRIPTION OF THE DRAWINGS

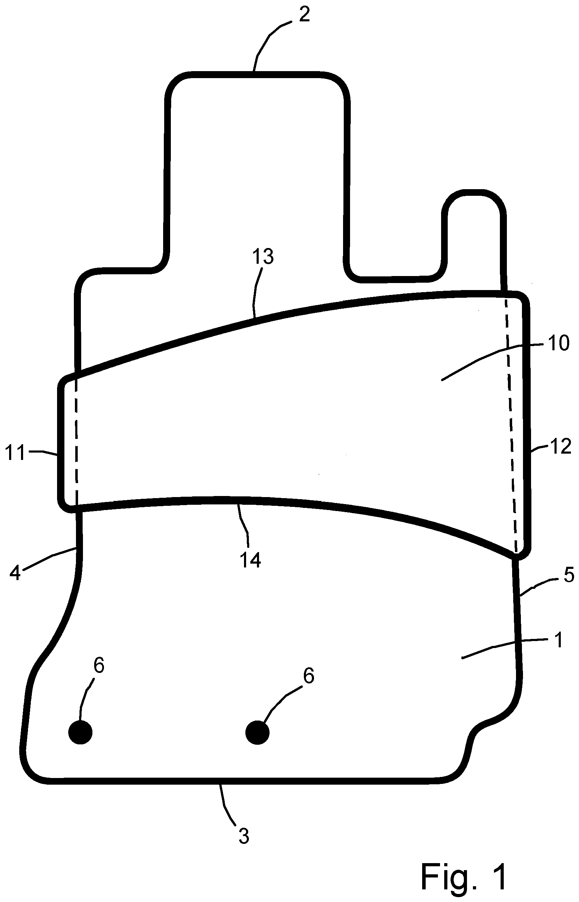

Referring firstly to **Fig. 1****,** this shows, purely by way of example, a typical car mat which is shaped to fit in the driver's floor well of a motor vehicle. The base mat 1 has opposite top and bottom edges 2 and 3 and opposite side edges 4 and 5. The top edge 2 is usually shaped to fit around the accelerator, brake and clutch pedals as shown, although the precise configuration of the edges will vary considerably from vehicle to vehicle. In some cases connectors 6 may be provided adjacent to the bottom edge 3 to anchor the mat down in use to studs provided in the foot well of the vehicle.

A universal heel pad 10 is shaped to extend across the entire width of the base mat 1, with the ends 11 and 12 of the heel pad projecting beyond the side edges 4 and 5. The dimensions of the heel pad are chosen such that the ends 11 and 12 will project as described for every make and model of vehicle up to the widest driver's mat on the market. In each case the top and bottom edges 13 and 14 of the heel pad will be inset from the top and bottom edges 2 and 3 of the base mat. It is generally preferred that the top and bottom edges 13 and 14 converge towards one side of the base mat, as shown, since this generally covers the areas subject greatest wear, but they could also be substantially parallel or of any other desired shape.

The base mat 1 and the heel pad 2 are both formed of textile materials which can be joined by HFW. The range of suitable materials is vast, and certain materials will weld better than others. In some cases the heel pad 10 may need a backing material or compound to help the HFW to work better. For example, an EVA backing *(ethylene vinyl acetate)* may be applied to some heel pads to help the HFW process, particularly if thick carpet materials are used.

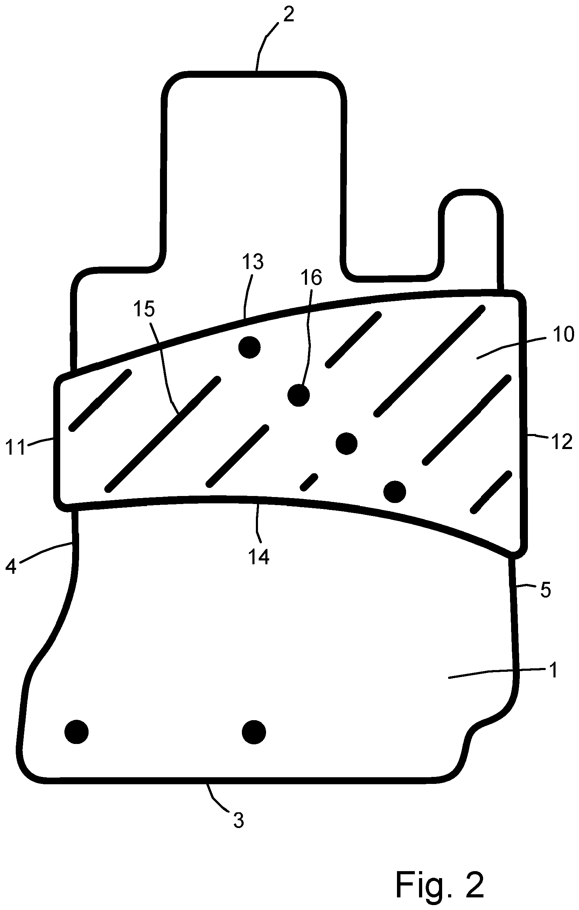

The HFW process is carried out using a brass HFW die which is preferably capable of forming a continuous weld around the entire periphery of the heel pad 10. Alternatively, the die could just form welds along the top and bottom edges 13 and 14. Preferably the die also incorporates a pattern of lines, spots or any other shapes which are positioned across the central region of the heel pad. Thus, when HFW takes place as shown in **Fig. 2** the heel pad 10 will become welded to the base mat 1 along the top and bottom edges 13 and 14 as well as additional line and spot welds 15 and 16 in the central region of the heel pad which combine to form an aesthetically pleasing design that becomes embossed into the heel pad when it is welded to the base mat. It will be appreciated that other designs can be used to form the central welds, and it would even be possible to incorporate an name or logo into the weld pattern. The additional welds hold the middle of the heel pad to the base mat and prevent ballooning of the heel pad which could allow the heel pad to lift and cause problems with the drivers heels getting caught on the raised areas.

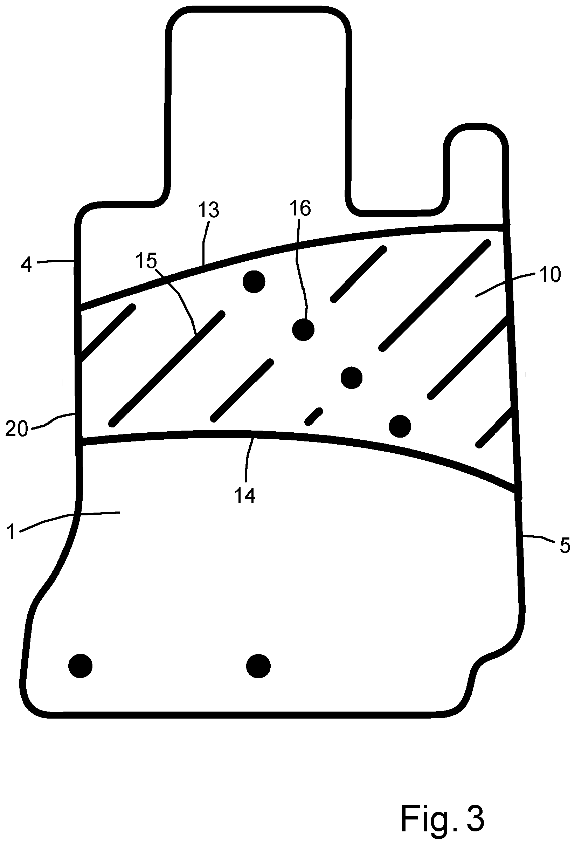

When the HFW process is finished the overhanging ends 11 and 12 of the heel pad 10 are cut off to match the underlying side edges 4 and 5 of the base mat 1, as shown in **Fig. 3****.** A conventional edge binding 20 is then applied around the periphery of the mat, covering the cut edges of the heel pad and ensuring that no gaps remain between the cut ends of the heel pad and the side edges of the base mat.

The process therefore achieves the objective of providing an aesthetically appealing mat in which the heel pad covers the full wearing area of the base mat with reduced risk of interference with free movement of the driver's feet and with the benefit of a single HFW tool.

Whilst the above description places emphasis on the areas which are believed to be new and addresses specific problems which have been identified, it is intended that the features disclosed herein may be used in any combination which is capable of providing a new and useful advance in the art.

## Claims

1. A method of making a mat which includes a base mat (1) having opposite side edges (4, 5) and opposite top and bottom edges (2 and 3), and a heel pad (10) having top and bottom edges (13 and 14), in which the heel pad is secured to an upper surface of the base mat by high frequency welding using a brass welding die,
**characterised by**
- applying the heel pad to the base mat to provide overhanging ends (11 and 12) which extend beyond the opposite side edges (4, 5) of the base mat with the top and bottom edges (13 and 14) of the heel pad inset from the top and bottom edges (2 and 3) of the base mat;
- securing the heel pad to the base mat by high frequency welds extending along at least the top and bottom edges (13 and 14) of the heel pad; and
- when the high frequency welding process is finished, trimming off the overhanging ends (11 and 12) of the heel pad.

2. A method of making a mat according to Claim 1 in which the heel pad (10) is secured to the base mat (1) by additional high frequency welds (15, 16) between the top and bottom edges (13 and 14) of the heel pad.

3. A method of making a mat according to Claim 1 in which the top and bottom edges (13 and 14) of the heel pad converge towards one of the side edges (4) of the base mat.

4. A method of making a mat according to Claim 1 in which an edge binding (20) is applied around the periphery of the base mat, covering the cut edges of the heel pad.

5. A mat which includes a base mat (1) having opposite side edges (4, 5) and opposite top and bottom edges (2 and 3), and a heel pad (10) having top and bottom edges (13 and 14), in which the heel pad is secured to an upper surface of the base mat by high frequency welding using a brass welding die, in which
- the top and bottom edges (13 and 14) of the heel pad are inset from the top and bottom edges (2 and 3) of the base mat;
- the heel pad is secured to the base mat by high frequency welds extending along at least the top and bottom edges (13 and 14) of the heel pad;
**characterised in that**
- the heel pad extends up to both of the opposite side edges (4, 5) of the base mat.

6. A mat according to Claim 5 in which the heel pad (10) is secured to the base mat (1) by additional high frequency welds (15, 16) between the top and bottom edges (13 and 14) of the heel pad.

7. A mat according to Claim 5 in which the top and bottom edges (13 and 14) of the heel pad converge towards one of the side edges (4) of the base mat.

## Patentansprüche

1. Verfahren zur Herstellung einer Matte, die eine Basismatte (1), die gegenüberliegende Seitenkanten (4, 5) und gegenüberliegende Ober- und Unterkanten (2 und 3) aufweist, und ein Fersenpolster (10) umfasst, das Ober- und Unterkanten (13 und 14) aufweist, wobei das Fersenpolster auf einer Oberseite der Basismatte durch Hochfrequenzschweißen unter Verwendung eines Schweißwerkzeugs aus Messing befestigt ist,
**gekennzeichnet durch**
Anbringen des Fersenpolsters auf der Basismatte, so dass überstehende Enden (11 und 12) bereitgestellt werden, die über die gegenüberliegenden Seitenkanten (4, 5) der Basismatte hinaus vorstehen, wobei die Ober- und Unterkanten (13 und 14) des Fersenpolsters gegenüber den Ober- und Unterkanten (2 und 3) der Basismatte nach innen versetzt sind;
Befestigen des Fersenpolsters an der Basismatte durch Hochfrequenzschweißungen, die sich wenigstens entlang der Ober- und Unterkanten (13 und 14) des Fersenpolsters erstrecken; und
wenn der Hochfrequenzschweißprozess beendet ist, Abschneiden der überstehenden Enden (11 und 12) des Fersenpolsters.

2. Verfahren zur Herstellung einer Matte nach Anspruch 1, bei dem das Fersenpolster (10) an der Basismatte (1) über zusätzliche Hochfrequenzschweißnähte (15, 16) zwischen den Ober- und Unterkanten (13 und 14) des Fersenpolsters befestigt ist.

3. Verfahren zur Herstellung einer Matte nach Anspruch 1, bei dem die Ober- und Unterkanten (13 und 14) des Fersenpolsters sich zu einer der Seitenkanten (4) der Basismatte einander nähern.

4. Verfahren zur Herstellung einer Matte nach Anspruch 1, bei dem ein Einfassband (20) um den Umfang der Basismatte angebracht ist, um die Schnittkanten des Fersenpolsters abzudecken.

5. Matte, die eine Basismatte (1), die gegenüberliegende Seitenkanten (4, 5) und gegenüberliegende Ober- und Unterkanten (2 und 3) aufweist, und ein Fersenpolster (10) umfasst, das Ober- und Unterkanten (13 und 14) aufweist, wobei das Fersenpolster an einer Oberseite der Basismatte durch Hochfrequenzschweißen unter Verwendung eines Schweißwerkzeugs aus Messing befestigt ist, wobei
die Ober- und Unterkanten (13 und 14) des Fersenpolsters gegenüber den Ober- und Unterkanten (2 und 3) der Basismatte nach innen versetzt sind;
das Fersenpolster an der Basismatte durch Hochfrequenzschweißungen, die sich wenigstens entlang der Ober- und Unterkanten (13 und 14) des Fersenpolsters erstrecken, befestigt ist,
**dadurch gekennzeichnet, dass**
das Fersenpolster sich bis zu beiden der gegenüberliegenden Seitenkanten (4, 5) der Basismatte erstreckt.

6. Matte nach Anspruch 5, bei der das Fersenpolster (10) an der Basismatte (1) über zusätzliche Hochfrequenzschweißnähte zwischen den Ober- und Unterkanten (13 und 14) des Fersenpolsters befestigt ist.

7. Matte nach Anspruch 5, bei der die Ober- und Unterkanten (13 und 14) des Fersenpolsters sich zu einer der Seitenkanten (4) der Basismatte einander nähern.

## Revendications

1. Procédé de fabrication d'un tapis qui comprend un tapis de base (1) ayant des bords latéraux opposés (4, 5) et des bords supérieur et inférieur opposés (2 et 3), et un repose-talon (10) ayant des bords supérieur et inférieur (13 et 14), le repose-talon étant fixé à une surface supérieure du tapis de base par soudage à haute fréquence à l'aide d'une mâchoire de soudage en laiton, **caractérisé par**
- appliquer le repose-talon sur le tapis de base pour obtenir des extrémités en surplomb (11 et 12) qui s'étendent au-delà des bords latéraux opposés (4, 5) du tapis de base avec les bords supérieur et inférieur (13 et 14) du repose-talon en retrait par rapport aux bords supérieur et inférieur (2 et 3) du tapis de base ;
- fixer le repose-talon au tapis de base par des soudures à haute fréquence s'étendant le long d'au moins les bords supérieur et inférieur (13 et 14) du repose-talon ; et
- lorsque le traitement de soudage à haute fréquence est terminé, découper les extrémités en surplomb (11 et 12) du repose-talon.

2. Procédé de fabrication d'un tapis selon la revendication 1, dans lequel le repose-talon (10) est fixé au tapis de base (1) par des soudures à haute fréquence supplémentaires (15, 16) entre les bords supérieur et inférieur (13 et 14) du repose-talon.

3. Procédé de fabrication d'un tapis selon la revendication 1, dans lequel les bords supérieur et inférieur (13 et 14) du repose-talon convergent vers l'un des bords latéraux (4) du tapis de base.

4. Procédé de fabrication d'un tapis selon la revendication 1, dans lequel un galonnage (20) est appliqué autour de la périphérie du tapis de base, recouvrant les bords découpés du repose-talon.

5. Tapis qui comprend un tapis de base (1) ayant des bords latéraux opposés (4, 5) et des bords supérieur et inférieur opposés (2 et 3), et un repose-talon (10) ayant des bords supérieur et inférieur (13 et 14), le repose-talon étant fixé à une surface supérieure du tapis de base par soudage à haute fréquence à l'aide d'une mâchoire de soudage en laiton, dans lequel
- les bords supérieur et inférieur (13 et 14) du repose-talon sont en retrait par rapport aux bords supérieur et inférieur (2 et 3) du tapis de base ;
- le repose-talon est fixé au tapis de base par des soudures à haute fréquence s'étendant le long d'au moins les bords supérieur et inférieur (13 et 14) du repose-talon ;
**caractérisé par le fait que**
- le repose-talon s'étend jusqu'aux deux bords latéraux opposés (4, 5) du tapis de base.

6. Tapis selon la revendication 5, dans lequel le repose-talon (10) est fixé au tapis de base (1) par des soudures à haute fréquence supplémentaires (15, 16) entre les bords supérieur et inférieur (13 et 14) du repose-talon.

7. Tapis selon la revendication 5, dans lequel les bords supérieur et inférieur (13 et 14) du repose-talon convergent vers l'un des bords latéraux (4) du tapis de base.
